# EUROPÄISCHE PATENTSCHRIFT

(11) **EP 4 234 354 B1**
(45) Veröffentlichungstag und Bekanntmachung des Hinweises auf die Patenterteilung: **26.08.2026**
(21) Anmeldenummer: 22158263.8
(22) Anmeldetag: 23.02.2022
(51) Int. Cl.: B60W 40/11, B60W 40/112, B60W 50/02

(54) **VERFAHREN ZUR PLAUSIBILISIERUNG EINER DREHRATE EINES FAHRZEUGAUFBAUS EINES FAHRZEUGS UND VORRICHTUNG ZUR AUSFÜHRUNG DES VERFAHRENS**
METHOD FOR THE PLAUSIBILITY CHECK OF A ROTATION RATE OF A VEHICLE BODY AND DEVICE FOR CARRYING OUT THE METHOD
PROCÉDÉ DE PLAUSIBILISATION D'UN TAUX DE ROTATION D'UNE CARROSSERIE D'UN VÉHICULE ET DISPOSITIF DE MISE EN UVRE DU PROCÉDÉ

(43) Veröffentlichungstag der Anmeldung: 30.08.2023
(60) Teilanmeldung: 24214100.0 / 4 509 378
(73) Patentinhaber: KNORR-BREMSE Systeme für Nutzfahrzeuge GmbH, 80809 München (DE)
(72) Erfinder: SCHÜTZ, Lukas, 76137 Karlsruhe (DE)

(56) Entgegenhaltungen:
- WO-A1-2021/059845
- DE-A1- 102007 037 508
- DE-A1- 102016 123 875
- DE-A1- 19 819 780

## Beschreibung

Die Erfindung betrifft ein Verfahren zur Plausibilisierung einer gemessenen oder ermittelten Rollrate eines Fahrzeugaufbaus eines Fahrzeugs und eine Vorrichtung zur Ausführung des Verfahrens gemäß den Ansprüchen 1 und 5.

In Fahrdynamikregelsystemen, wie beispielsweise einem ESP, werden zum Erfassen der Fahrzeugbewegung Sensoren zur Messung von Beschleunigungen und Drehraten genutzt. Die Sensoren sind in der Regel fest am Fahrzeugaufbau angebracht und messen, je nach Ausführungsform, bis zu sechs Freiheitsgrade des Fahrzeugaufbaus, bestehend aus den Beschleunigungen und den Drehraten, jeweils in allen drei Achsen des kartesischen Fahrzeugkoordinatensystems. Um Fehlfunktionen der Fahrdynamikregelsysteme zu vermeiden, müssen die Messsignale der Sensoren auf Plausibilität überwacht werden. Die Drehrate um die Hochachse (Gierrate) und die Beschleunigung in Querrichtung des Fahrzeugs (Querbeschleunigung) stellen dabei aus Sicht der Fahrdynamikregelung die wichtigsten Größen dar. Entsprechend sind diese Sensoren so ausgeführt, dass sie mindestens die Gierrate und häufig auch die Querbeschleunigung erfassen. Zur Überwachung der Plausibilität lassen sich diese beiden Größen, unter Verwendung zusätzlicher Messgrößen, ineinander überführen. Immer häufiger findet Sensorik Einsatz, welche weitere Freiheitsgrade, häufig alle sechs Freiheitsgrade, erfasst. Deshalb werden weitere Verfahren zur Überwachung der Plausibilität der zusätzlich erfassten Freiheitsgrade benötigt.

Aus dem Stand der Technik bekannte Verfahren zur Überwachung von Sensorik zur Erfassung einer Fahrzeugbewegung im Allgemeinen sehen beispielsweise eine redundante Messung der entsprechenden Größe durch mindestens zwei Sensoren vor. Weichen die Messwerte der redundanten Sensoren zu stark voneinander ab, so wird ein Defekt erkannt, wie in DE102018204286A1 vorgeschlagen. In DE102017208375A1 wird ein Verfahren zum Detektieren eines fehlerhaft arbeitenden Drehratensensors vorgestellt. Konkret wird hier die Rollrate überwacht, indem aus dem Drehratensignal ein Rollwinkel ermittelt und überprüft wird, ob sich dieser innerhalb eines gültigen Bereichs befindet. Die Ermittlung eines Rollwinkels aus dem Rollratensignal unterliegt Fehlern durch Rauschen und Offsets der Sensorik. Deshalb wird in der Regel eine weitere Messgröße zur Stützung hinzugezogen. Das hat zur Folge, dass nicht mehr identifiziert werden kann welche Messgröße für einen eventuellen Fehler ursächlich ist. In DE102004020927A1 wird ein Verfahren zur Überprüfung der Funktionstüchtigkeit eines Sensors vorgestellt, indem die zu überwachende physikalische Messgröße mit Hilfe eines weiteren Sensors, welcher eine zweite physikalische Messgröße erfasst, welche sich in die zu überwachende physikalische Größe überführen lässt, verglichen wird. Als Beispiel wird die Berechnung einer Drehrate um die Längs- bzw. Querachse des Fahrzeugs aus gemessenen Federwegen oder Radlasten vorgeschlagen. Weicht die so berechnete Drehrate zu stark von der direkt gemessenen Drehrate ab, wird ein Fehler erkannt.

Die aus dem Stand der Technik bekannten Verfahren zur Überwachung der Drehraten um die Längs- und Querachse eines Fahrzeugs setzen daher entweder voraus, dass die entsprechende Sensorik redundant verbaut wird oder alternativ Sensorik zur Erfassung einer anderen, mit der Drehrate korrelierenden, physikalischen Größe verbaut wird. Dies ist mit entsprechenden zusätzlichen Kosten verbunden.

Weitere aus der Literatur bekannte Ansätze nutzen Modelle, welche die Bewegung des Fahrzeugaufbaus abbilden. Mit Hilfe dieser Modelle können, unter Verwendung einer oder mehrerer Eingangsgrößen (beispielsweise Lenkwinkel und Fahrzeuggeschwindigkeit), Aussagen über die Bewegung des Fahrzeugaufbaus und damit über die Drehraten um die Längs- und Querachse des Fahrzeugs getroffen werden. Diese Aussagen können mit den Messsignalen des Sensors verglichen und Abweichungen ermittelt werden. Diese modellbasierten Ansätze sind stark von der Qualität der Modellierung und der Modellparameter abhängig. Die Modellparameter müssen für jede Fahrzeugvariante neu ermittelt oder kompliziert geschätzt werden, was mit entsprechendem Mehraufwand verbunden ist.

Ein gattungsgemäßes Verfahren ist aus DE102007037508 A1 bekannt, wobei ein Rollraten-Plausibilitätscheck durchgeführt wird, indem ein Rollratensensorwert mit einer Rollratenabschätzung basierend Sensorsignalen eines Querbeschleunigungssensors erfolgt. WO 2021/059845A1 offenbart eine Abschätzung der Rollrate eines Fahrzeugs auf der Basis einer Änderung der Querbeschleunigung.

Die Aufgabe der Erfindung besteht darin, ein Verfahren zur Plausibilisierung von erfassten oder ermittelten Rollrate eines Fahrzeugs zur Verfügung zu stellen, welches mit geringem Rechenaufwand durchführbar ist. Weiterhin soll auch eine Vorrichtung zur Ausführung des Verfahrens offenbart werden.

Diese Aufgabe wird durch die Merkmale der Ansprüche 1 und 5 gelöst.

### Offenbarung der Erfindung

Ein erster Aspekt der Erfindung offenbart ein computerimplementiertes Verfahren zur Plausibilisierung einer gemessenen oder ermittelten Rollrateφ̇ eines Fahrzeugaufbaus eines Fahrzeugs um eine Längsachse des Fahrzeugs, bei welchem aus einer gemessenen oder ermittelten Querbeschleunigung ay in Querrichtung y des Fahrzeugs eine Querbeschleunigungsänderung äy oder ein Querruck jy berechnet wird, auf deren Basis oder auf dessen Basis ein plausibler Wert oder ein plausibler Bereich für die Rollrate φ̇ ermittelt wird.

Bei dem Verfahren kann der plausible Bereich oder der plausible Wert für die Rollrate φ̇ auf der Basis einer funktionalen Abhängigkeit der Rollrate φ̇ von der Querbeschleunigungsänderung ȧy oder vom Querruck jy ermittelt wird.

Die funktionale Abhängigkeit ist dabei eine lineare Abhängigkeit und wird durch eine Gerade mit einer Steigung 1/g gebildet wird, wobei g die Erdbescheunigung ist.

Im Einzelnen stellt die Erfindung ein computerimplementiertes Verfahren zur Plausibilisierung einer gemessenen oder ermittelten Rollrate (φ̇) eines Fahrzeugaufbaus eines Fahrzeugs um eine Längsachse des Fahrzeugs zur Verfügung, wobei das Verfahren die folgenden Schritte umfasst:
a) Messen oder Ermitteln der Rollrate (φ̇) des Fahrzeugaufbaus,
b) Messen oder Ermitteln einer Querbeschleunigung (ay) in Querrichtung (y) des Fahrzeugs in einem fahrzeugfesten Koordinatensystem,
c) Berechnen einer Querbeschleunigungsänderung (äy) oder eines Querrucks (jy) als zeitliche Ableitung der Querbeschleunigung (ay), und
d) Ermitteln einer Geraden mit einer Steigung 1/g, wobei g die Erdbescheunigung ist, und wobei die Gerade eine lineare Abhängigkeit der Rollrate (φ̇) von der Querbeschleunigungsänderung (äy) oder von dem Querruck (jy) darstellt, und
e) Ermitteln eines plausiblen Bereichs für die Rollrate (φ̇) auf der Basis dieser Geraden, und
f) Prüfen, ob die gemessene oder ermittelte Rollrate (φ̇) außerhalb oder innerhalb des plausiblen Bereichs für die Rollrate (φ̇) liegt.

Vorzugsweise kann der plausible Bereich für die Rollrate φ̇ ein Toleranzband mit der Geraden insbesondere als Mittellinie umfassen. Zusätzlich kann der plausible Bereich für die Rollrate φ̇ einen erweiterten Bereich umfasst, welcher sich von dem Wert Null für die Rollrate φ̇ bis zum Toleranzband erstreckt.

Falls dann bei dieser Ausführungsform des Verfahrens einmal oder mehrmals festgestellt worden ist, dass eine gemessene oder ermittelte Rollrate φ̇ außerhalb oder nicht innerhalb des plausiblen Bereichs für die Rollrate φ̇ liegt, dann kann ein Nicht-Plausibel-Signal erzeugt weden, welches die gemessene oder ermittelte Rollrate φ̇ als nicht plausibel bewertet. Andernfalls, falls mehrmals oder einmal festgestellt worden ist, dass die gemessene oder ermittelte Rollrate φ̇ innerhalb des plausiblen Bereichs für die Rollrate φ̇ liegt, dann wird beispielsweise kein Nicht-Plausibel-Signal erzeugt und von einem plausiblen Wert für die gemessene oder ermittelte Rollrate φ̇ ausgegangen.

Gemäß einem weiteren Aspekt offenbart die Erfindung eine Vorrichtung zur Ausführung des oben beschriebenen Verfahrens gemäß Anspruch 5.

### Zeichnung

Ein Ausführungsbeispiel der Erfindung wird in der nachfolgenden Beschreibung mit Bezug zu den Figuren näher erläutert. Es zeigen:
- Fig. 1: eine perspektivische Darstellung eines Fahrzeugs, bei welchem ein Verfahren zur Plausibilisierung einer gemessenen Drehrate des Fahrzeugaufbaus gemäß einer bevorzugten Ausführung des erfindungsgemäßen Verfahrens durchgeführt wird;
- Fig. 2: ein Diagramm, welches einen Zusammenhang zwischen der Rollrate und einem Querruck des Fahrzeugs von Fig. 1 darstellt;
- Fig. 3: einen Programmablaufplan einer bevorzugten Ausführungsform des erfindungsgemäßen Verfahrens;
- Fig. 4: eine schematische Darstellung einer bevorzugten Ausführungsform einer Vorrichtung zur Ausführung des Verfahrens von Fig. 3.

### Beschreibung des Ausführungsbeispiels

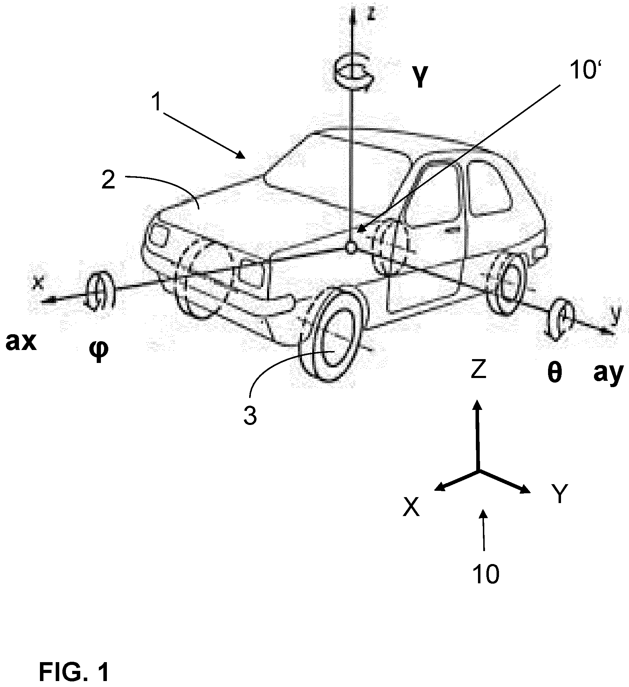

Eine bevorzugte Ausführungsformd es erfindungsgemäßen Verfahrens basiert auf den nachfolgend erläuterten physikalischen Hintergründen. In einem erdfesten Koordinatensystem 10 (X, Y, Z), wie es in Fig. 1 gezeigt ist, wirkt die Erdbeschleunigung g in Richtung des Erdmittelpunkts, also in Richtung der Hochachse Z. Wird beispielsweise ein Fahrzeugaufbau 2 eines Fahrzeugs 1 gegenüber dem erdfesten Koordinatensystem 10 (X, Y, Z) um die Längsachse (x-Achse) und/oder die Querachse (y-Achse) eines fahrzeugfesten Fahrzeugkoordinatensystems 10' (x, y, z) des Fahrzeugs 1 verdreht, so ändert sich der Betrag der auf diesen Achsen anteilig gemessenen Erdbeschleunigung g. Ändert sich also die Verdrehung des Fahrzeugaufbaus 2, so ändern sie auch die gemessenen Beschleunigungen. Dabei ist es irrelevant, was ursächlich für die Verdrehungsänderung ist. Mögliche Ursachen sind beispielsweise die Änderung der Neigung des Untergrunds oder die Änderung der Winkel des Fahrzeugaufbaus 2 gegenüber dem Fahrwerk 3 des Fahrzeugs 1 durch beispielsweise Einleiten einer Bremsung des Fahrzeugs 1, wobei der Fahrzeugaufbau 2 dann um die y-Achse des fahrzeugfesten Fahrzeugkoordinatensystems 10' (x, y, z) dreht (Nicken). Der Anteil der Erdbeschleunigung g, welcher entlang der Längsachse x und/oder entlang der Querachse y des Fahrzeugs 1 gemessen wird, lässt sich aus trigonometrischen Zusammenhängen ermitteln. Da die erwarteten maximalen Verdrehungen des Fahrzeugaufbaus 2 in einem niedrigen Bereich liegen (< 20°), können die trigonometrischen Funktionen mittels Kleinwinkelnäherung als linear approximiert werden. Somit ergeben sich für die gemessenen Anteile *aₓ* und *a_{y}* der Erdbeschleunigung g in x- und y-Richtung des fahrzeugfesten Fahrzeugkoordinatensystems 10' (x, y, z) folgende Zusammenhänge: ${a}_{x} = - g ⋅ θ$ ${a}_{y} = g ⋅ φ$ wobei
*g: Erdbeschleunigung*
*θ*: *Nickwinkel des Fahrzeugaufbaus gegenüber dem erdfesten Koordinatensystem 10 (nach DIN ISO 8855)*
*φ*: *Rollwinkel des Fahrzeugaufbaus gegenüber dem erdfesten Koordinatensystem 10 (nach DIN ISO 8855)*
sind.

Die Drehraten *θ̇* und *φ̇* lassen sich durch analytisches Differenzieren ermitteln: $\dot{a} x = - g ⋅ \dot{θ} ↔ \dot{θ} = - \dot{a} x / g$ $\dot{a} y = g ⋅ \dot{φ} ↔ \dot{φ} = \dot{a} y / g$

Der Zusammenhang zwischen den Drehraten *θ̇* und *φ̇* und den Beschleunigungsänderungen, also dem jeweiligen Ruck *jx* und *jy* in x- und y-Richtung $jx = \dot{a} x$ $jy = \dot{a} y$ ist daher linear, wobei die lineare Abhängigkeit jeweils durch eine Gerade definiert wird, deren Steigung 1/*g* bzw. -1/*g* beträgt.

Der Ruck *jx* bzw. *jy* ist die momentane zeitliche Änderungsrate der Beschleunigung *ax* bzw. *ay* des Fahrzeugs 1 in x- bzw. y-Richtung. Die SI-Einheit des Rucks ist m/s³. Formal ist der Ruck die Ableitung der Beschleunigung nach der Zeit, also die zweite zeitliche Ableitung der Geschwindigkeit und die dritte zeitliche Ableitung des Wegs. Wird wie hier von einem fahrzeugfesten Koordinatensystem 10' (x, y, z) ausgegangen, so kann der Ruck für jede Koordinatenrichtung getrennt bestimmt werden, hier insbesondere als Längsruck ax oder Querruck ay, oder allgemein vektoriell als Ableitung der Beschleunigung a bezüglich dieses fahrzeugfesten Koordinatensystems 10' (x, y, z).

Eine Drehrate *θ̇* bzw. *φ̇* ungleich Null hat also immer einen entsprechenden Ruck jx = *äx* bzw. jy = äy als Ursache. Eine Drehrate *θ̇* bzw. *φ̇* ungleich null bei einem Ruck jx = *äx* bzw. jy = ȧy gleich null bzw. mit einem betraglich zu geringen Ruck jx = äx bzw. jy = ȧy ist nicht plausibel und deutet daher auf ein fehlerhaftes Sensorsignal hin.

Neben der Erdbeschleunigung werden beispielsweise auch fahrdynamisch bedingte Linearbeschleunigungen durch die Sensorik erfasst. Diese treten beispielsweise bei Kurvenfahrt in Querrichtung y und bei Bremsen des Fahrzeugs 1 in Längsrichtung x auf. Diese fahrdynamisch bedingten Linearbeschleunigungen führen in der Regel zu einer Verdrehung des Fahrzeugaufbaus 2 gegenüber dem Fahrwerk 3. Diese Verdrehung ist zum einen baulich begrenzt, zum anderen durch Dämpfer beeinflusst. Deshalb ist es beispielsweise möglich, dass der Ruck jx = äx bzw. jy = äy zunimmt während die Drehrate Drehrate *θ̇* bzw. *φ̇* konstant bleibt.

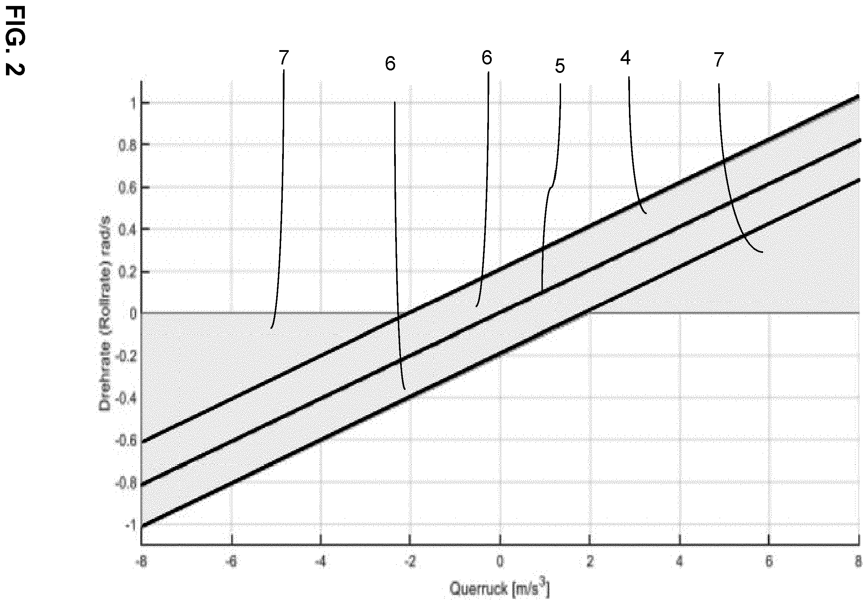

Die zuvor beschriebenen Zusammenhänge zwischen dem Ruck jx = ȧ*x* bzw. jy = äy und der Drehrate *θ̇ (Nickrate)* bzw. *φ̇ (Rollrate)* ermöglichen es, einen plausiblen Bereich 4 für die Drehrate *θ̇* bzw. *φ̇* in Abhängigkeit vom Ruck jx = ȧ*x* (Längsruck) bzw. jy = äy (Querruck) zu definieren. Dieser plausible Bereich ist in **Fig. 2** in Bezug auf eine Gerade dargestellt, welche den gemäß obiger Gleichung (4) linearen Zusammenhang zwischen der Rollrate *φ̇* (in rad/s) und dem Querruck jy = äy (in m/s³) wiedergibt. Diese Abhängigkeit bildet eine Gerade 5 mit einer Steigung 1/*g* gemäß obiger Gleichung (4) und stellt den erwarteten Zusammenhang zwischen der Rollrate *φ̇* (in rad/s) und dem Querruck jy = äy (in m/s³) dar, ohne dass fahrdynamisch bedingte Linearbeschleunigungen berücksichtigt worden sind. Ändert sich beispielsweise die Verdrehung des Fahrzeugaufbaus 2 gegenüber dem Fahrwerk 3 im Stillstand auf Grund einer Beladungsänderung, so bewegt sich die zu erwartende Rollrate *φ̇* exakt auf der Geraden 5.

Der in **Fig. 2** grau hinterlegte Bereich stellt den plausiblen Bereich 4 für die Rollrate *φ̇* dar. Bevorzugt umfasst der plausible Bereich 4 für die Rollrate *φ̇* ein Toleranzband 6 mit der Geraden 5 als Mittellinie. Zusätzlich kann der plausible Bereich 4 für die Rollrate *φ̇* einen erweiterten Bereich 7 umfassen, welcher sich von dem Wert Null für die Rollrate φ̇ bis zum Toleranzband 6 erstreckt und im Wesentlichen zwei dreieckförmige Bereiche gebildet wird, von welchen einer diesseits und der andere jenseits des Toleranzbands 6 angeordnet ist.

Der plausible Bereich für die Nickrate *θ̇* kann dann in analoger Weise auf der Basis einer Geraden bestimmt werden, welche gemäß obiger Gleichung (3) den linearen Zusammenhang zwischen dem Längsruck jx = ȧ*x* und der Nickrate *θ̇* wiedergibt, wobei die Steigung der Geraden dann gemäß obiger Gleichung (3) ein negatives Vorzeichen aufweist.

Da sowohl die Rollrate *φ̇* als auch die Nickrate *θ̇* jeweils eine Drehrate darstellen, wird in der folgenden Beschreibung einer bevorzugten Ausführungsform des Verfahrens als Ersatz für die Begriffe "Rollrate *φ̇*" und "Nickrate *θ̇*" der Begriff "Drehrate" verwendet.

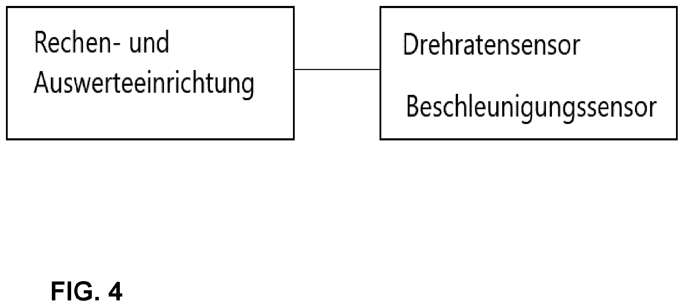

Eine Vorrichtung zur Ausführung des erfindungsgemäßen Verfahrens umfasst gemäß **Fig. 4** beispielsweise eine Sensoreinrichtung 8 mit einem Beschleunigungsensor und einem Drehratensensor sowie eine Rechen- und Auswerteeinrichtung 9, in welcher ein Programm implementiert ist, durch welches das Verfahren realisiert wird. Die Rechen- und Auswerteeinrichtung umfasst insbesondere wenigstens einen Mikroprozessor und einen Speicher. Die Sensoreinrichtung steuert beispielsweise die Beschleunigung a repräsentierende Beschleunigungssignale und die Drehrate repräsentierende Drehratensignale in die Rechen- und Auswerteeinrichtung ein, wo sie dann im Sinne des erfindungsgemäßen Verfahrens ausgewertet werden.

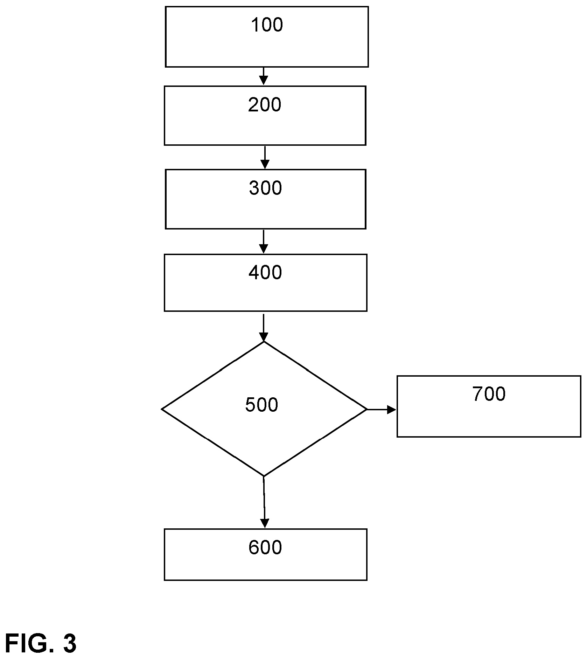

Dieses Programm wird im Folgenden anhand des in **Fig. 3** dargestellten Ablaufplans beschrieben.

In einem Schritt 100 wird beispielsweise mit Hilfe des Drehratensenors der Sensoreinrichtung 8 die Drehrate des Fahrzeugaufbaus 2 des Fahrzeugs 1 gemessen, mit Bezug auf **Fig. 2** beispielsweise die Rollrate *φ̇*. Stattdessen kann die Drehrate aber auch von einer anderen, durch einen Sensor gemessenen Größe abgeleitet werden.

In einem Schritt 200 wird dann mit Hilfe des Beschleunigungssensors der Sensoreinrichtung 8 die Beschleunigung a des Fahrzeugs gemessen oder in der Rechen- und Auswerteeinheit aus einer anderen Größe ermittelt, welche sich auf den Fahrzeugaufbau 2 richtungsgleich in Bezug auf die Drehrate auswirkt, mit Bezug auf **Fig. 2** beispielsweise die Querbeschleunigung ay.

In einem Schritt 300 wird dann in der Rechen- und Auswerteeinheit aus der gemessenen oder ermittelten Beschleunigung die zeitliche Beschleunigungsänderung ȧ oder der Ruck j als zeitliche Ableitung der Beschleunigung a berechnet. Aus der Beschleunigungsänderung ȧ oder dem Ruck j wird dann in der Rechen- und Auswerteeinheit in einem Schritt 400 die Gerade 5 und auf der Basis dieser Geraden 5 der plausible Bereich 4 für die Drehrate ermittelt, hier insbesondere für die Rollrate *φ̇*.

In einem Schritt 500 wird dann von der Rechen- und Auswerteeinheit 9 geprüft, ob die gemessene oder ermittelte Drehrate außerhalb oder innerhalb des plausiblen Bereichs 4 liegt. Die kann beispielsweise dadurch realisiert sein, dass ein laufender Zähler, welcher vorzugsweise bei Null beginnt, um einen Zählwert aktualisiert wird, z.B. "0 + 1", wenn die gemessene oder ermittelte Drehrate, hier insbesondere die Rollrate *φ̇*. außerhalb oder nicht innerhalb des plausiblen Bereichs 4 liegt. Falls dann dieser aktualisierte Zähler "1" einen Schwellwert z.B. den Schwellwert "2" überschreitet, dann bedeutet dies, dass die gemessene oder ermittelte Drehrate, insbesondere die die Rollrate *φ̇* mehrmals außerhalb des des plausiblen Bereichs 4 gelegen hat.

Dann wird in der Rechen- und Auswerteeinheit 9 in einem Schritt 600 ein Nicht-Plausibel-Signal erzeugt, welches die (zuletzt) gemessene oder ermittelte Drehrate, insbesondere die gemessene oder ermittelte Rollrate *φ̇* als nicht plausibel bewertet. Bevorzugt muss daher durch die Rechen- und Auswerteeinheit 9 in dem Schritt 600 mehrmals festgestellt worden sein, dass eine gemessene oder ermittelte Drehrate, insbesondere die gemessene oder ermittelte Rollrate *φ̇* außerhalb des jeweiligen plausiblen Bereichs 4 gelegen hat, bevor das Nicht-Plausibel-Signal erzeugt wird. Alternativ kann auch vorgesehen sein, dass, wenn in dem Schritt 500 die gemessene oder ermittelte Drehrate, insbesondere die gemessene oder ermittelte Rollrate *φ̇* lediglich einmal außerhalb oder nicht innerhalb des plausiblen Bereichs liegt, von der Rechen- und Auswerteeinheit 9 bereits das Nicht-Plausibel-Signal erzeugt wird.

Andernfalls, d.h. falls die Rechen- und Auswerteeinheit im Schritt 500 festgestellt hat, dass die gemessene oder ermittelte Drehrate, insbesondere die gemessene oder ermittelte Rollrate *φ̇* einmalig oder mehrmals innerhalb oder nicht außerhalb des plausiblen Bereichs 4 liegt oder gelegen hat, dann wird von der Rechen- und Auswerteeinheit 9 kein Nicht-Plausibel-Signal erzeugt und dann in einem Schritt 700 die gemessene oder ermittelte Drehrate, insbesondere die gemessene oder ermittelte Rollrate *φ̇* beispielsweise als Eingangsgröße für ein Fahrdynamikregelsystem herangezogen. Dies kann dadurch geschehen, dass dann die Rechen- und Auswerteeinheit 9 die gemessene oder ermittelte Drehrate, insbesondere die gemessene oder ermittelte Rollrate *φ̇* in das Fahrdynamikregelsystem einsteuert.

Allgemein geht das vorgeschlagene Verfahren daher beispielsweise aus von einer Messung der Drehraten des Fahrzeugaufbaus 2 um mindestens zwei senkrecht zueinanderstehende Achsen, hier beispielsweise um die x-Achse (Längsachse des Fahrzeugs 1) und die y-Achse (Querachse des Fahrzeugs 2) im fahrzeugfesten Koordinatensystem 10'. Dabei ist die Ebene, welche diese Achsen zusammen aufspannen, vorzugsweise parallel zu einer Ebene, welche durch die Längsachse x und die Querachse y des fahrzeugfesten Koordinatensystems 10' aufgespannt wird. Weiterhin muss vorzugsweise die relative Verdrehung des fahrzeugfesten Koordinatensystems 10' in Bezug zu dem erdfesten Koordinatensystem 10 bekannt sein oder ermittelt werden, so dass die gemessenen Drehraten auf eine Drehrate um die Längsachse x und eine Drehrate um die Querachse y des Fahrzeugs überführt werden können.

Beispielsweise eine weitere Voraussetzung bildet die Messung der Beschleunigungen a des Fahrzeugaufbaus 2, ebenfalls in mindestens zwei senkrecht zueinanderstehenden Achsen. Die gemessenen Beschleunigungen müssen sich vorzugsweise, analog zu den Drehraten, in eine Beschleunigung ax in Richtung der Längsachse x und in eine Beschleunigung ay in Richtung der Querachse y des Fahrzeugs 1 überführen lassen.

### BEZUGSZEICHENLISTE

- 1: Fahrzeug
- 2: Fahrzeugaufbau
- 3: Fahrwerk
- 4: plausibler Bereich
- 5: Gerade
- 6: Toleranzband
- 7: erweiterter Bereich
- 8: Sensoreinrichtung
- 9: Rechen- und Auswerteeinrichtung
- 10: erdfestes Koordinatensystem
- 10': fahrzeugfestes Koordinatensystem
- g: Erdbeschleunigung
- *θ*: Nickwinkel
- *φ*: Rollwinkel
- *θ̇*: Nickrate
- *φ̇*: Rollrate
- *aₓ*: Längsbeschleunigung
- *a_{y}*: Querbeschleunigung
- ȧ*x, jx*: Längsbeschleinigungsänderung/Längsruck
- ȧy, jy: Querbeschleunigungsänderung/Querruck

## Patentansprüche

1. Computerimplementiertes Verfahren zur Plausibilisierung einer gemessenen oder ermittelten Rollrate (φ̇) eines Fahrzeugaufbaus (2) eines Fahrzeugs (1) um eine Längsachse (x) des Fahrzeugs (1), wobei das Verfahren die folgenden Schritte umfasst:
a) Messen oder Ermitteln (100) der Rollrate (φ̇) des Fahrzeugaufbaus (2),
b) Messen oder Ermitteln (200) einer Querbeschleunigung (ay) in Querrichtung (y) des Fahrzeugs (1) in einem fahrzeugfesten Koordinatensystem (10'), **gekennzeichnet durch**
c) Berechnen (300) einer Querbeschleunigungsänderung (äy) oder eines Querrucks (jy) als zeitliche Ableitung der Querbeschleunigung (ay), und
d) Ermitteln (400) einer Geraden (5) mit einer Steigung 1/g, wobei g die Erdbescheunigung ist, und wobei die Gerade (5) eine lineare Abhängigkeit der Rollrate (φ̇) von der Querbeschleunigungsänderung (äy) oder von dem Querruck (jy) darstellt, und
e) Ermitteln (400) des plausiblen Bereichs (4) für die Rollrate (φ̇) auf der Basis dieser Geraden (5), und
f) Prüfen (500), ob die gemessene oder ermittelte Rollrate (φ̇) außerhalb oder innerhalb des plausiblen Bereichs für die Rollrate (φ̇) liegt.

2. Verfahren nach Anspruch 1, **dadurch gekennzeichnet, dass** der plausible Bereich (4) für die Rollrate (φ̇) ein Toleranzband (6) mit der Geraden (5) insbesondere als Mittellinie umfasst.

3. Verfahren nach Anspruch 2, **dadurch gekennzeichnet, dass** der plausible Bereich (4) für die Rollrate (φ̇) wenigstens einen erweiterten Bereich (7) umfasst, welcher sich von dem Wert Null für die Rollrate (φ̇) bis zum Toleranzband (6) erstreckt.

4. Verfahren nach einem der vorhergehenden Ansprüche, **dadurch gekennzeichnet, dass**
a) falls einmal oder mehrmals festgestellt worden ist, dass eine oder die gemessene oder ermittelte Rollrate (φ̇) außerhalb oder nicht innerhalb des plausiblen Bereichs (4) für die Rollrate (φ̇) liegt, dann wird ein Nicht-Plausibel-Signal erzeugt, welches die gemessene oder ermittelte Rollrate (φ̇) als nicht plausibel bewertet, und
b) falls mehrmals oder einmal festgestellt worden ist, dass eine oder die gemessene oder ermittelte Rollrate (φ̇) innerhalb des plausiblen Bereichs für die Rollrate (φ̇) liegt, dann wird kein Nicht-Plausibel-Signal erzeugt und von einem plausiblen Wert für die gemessene oder ermittelte Rollrate (φ̇) ausgegangen.

5. Vorrichtung zur Ausführung des Verfahrens nach einem der vorhergehenden Ansprüche, wenigstens umfassend:
a) Eine Sensoreinrichtung mit wenigstens einem Beschleunigungssensor und wenigstens einem Drehratensensor,
b) eine Rechen- und Auswerteeinrichtung, welche Beschleunigungssignale des wenigstens einen Beschleunigungssensors und des wenigstens einen Drehratensensors gemäß dem Verfahren verarbeitet.

## Claims

1. A computer-implemented method for checking the plausibility of a measured or determined roll rate (*φ̇*) of a vehicle body (2) of a vehicle (1) about a longitudinal axis (x) of the vehicle (1), wherein the method comprises the following steps:
a) measuring or determining (100) the roll rate (*φ̇*) of the vehicle body (2),
b) measuring or determining (200) a lateral acceleration (ay) in the lateral direction (y) of the vehicle (1) in a vehicle-fixed coordinate system (10'), **characterized by**
c) calculating (300) a change in lateral acceleration (*ȧ*y) or a lateral jerk (jy) as the time derivative of the lateral acceleration (ay), and
d) determining (400) a straight line (5) with a gradient 1/g, where g is gravitational acceleration, and wherein the straight line (5) represents a linear dependency between the roll rate (*φ̇*) and the change in lateral acceleration (*ȧ*y) or the lateral jerk (jy), and
e) determining (400) the plausible range (4) for the roll rate (*φ̇*) on the basis of this straight line (5), and
f) checking (500) whether the measured or determined roll rate (*φ̇*) lies outside or within the plausible range for the roll rate (*φ̇*).

2. The method as claimed in claim 1, **characterized in that** the plausible range (4) for the roll rate (*φ̇*) comprises a tolerance band (6) with the straight line (5), in particular as the centerline.

3. The method as claimed in claim 2, **characterized in that** the plausible range (4) for the roll rate (*φ̇*) comprises at least one extended range (7) that extends from the value zero for the roll rate (*φ̇*) to the tolerance band (6).

4. The method as claimed in any one of the preceding claims, **characterized in that**
a) if it has been determined once or repeatedly that a or the measured or determined roll rate (*φ̇*) is outside or not within the plausible range (4) for the roll rate (*φ̇*) then a Not-Plausible signal is generated that assesses the measured or determined roll rate (*φ̇*) as not plausible, and
b) if it has been determined once or repeatedly that a or the measured or determined roll rate (*φ̇*) is within the plausible range for the roll rate (*φ̇*), then no Not-Plausible signal is generated and a plausible value for the measured or determined roll rate (*φ̇*) is assumed.

5. A device for carrying out the method as claimed in any one of the preceding claims, comprising at least:
a) a sensor apparatus having at least one acceleration sensor and at least one rotation rate sensor,
b) a computing and evaluation apparatus that processes acceleration signals from the at least one acceleration sensor and the at least one rotation rate sensor according to the method.

## Revendications

1. Procédé mis en œuvre par ordinateur pour établir la plausibilité d'un taux de roulis (*φ̇*) mesuré ou déterminé d'une carrosserie (2) d'un véhicule (1) autour d'un axe longitudinal (x) du véhicule (1), dans lequel le procédé comprend les étapes suivantes :
a) la mesure ou la détermination (100) du taux de roulis (*φ̇*) de la carrosserie (2),
b) la mesure ou la détermination (200) d'une accélération transversale (ay) en direction transversale (y) du véhicule (1) dans un système de coordonnées (10') fixe par rapport au véhicule, **caractérisé par**
c) le calcul (300) d'une variation d'accélération transversale (*ȧ*y) ou d'une secousse transversale (jy) en tant que dérivée temporelle de l'accélération transversale (ay), et
d) la détermination (400) d'une droite (5) avec une inclinaison de 1/g, dans lequel g est l'accélération gravitationnelle, et dans lequel la droite (5) représente une dépendance linéaire du taux de roulis (*φ̇*) par rapport à la variation d'accélération transversale (*ȧ*y) ou à la secousse transversale (jy), et
e) la détermination (400) de la plage plausible (4) pour le taux de roulis (*φ̇*) sur la base de cette droite (5), et
f) la vérification (500) établissant si le taux de roulis (*φ̇*) mesuré ou déterminé se situe à l'extérieur ou à l'intérieur de la plage plausible pour le taux de roulis (*φ̇*).

2. Procédé selon la revendication 1, **caractérisé en ce que** la plage plausible (4) pour le taux de roulis (*φ̇*) comprend une bande de tolérance (6) avec la droite (5) en particulier en tant que ligne médiane.

3. Procédé selon la revendication 2, **caractérisé en ce que** la plage plausible (4) pour le taux de roulis (*φ̇*) comprend au moins une plage étendue (7) qui s'étend de la valeur nulle pour le taux de roulis (*φ̇*) jusqu'à la bande de tolérance (6).

4. Procédé selon l'une quelconque des revendications précédentes, **caractérisé en ce que**
a) s'il est constaté une ou plusieurs fois qu'un ou le taux de roulis (*φ̇*) mesuré ou déterminé se situe à l'extérieur ou pas à l'intérieur de la plage plausible (4) pour le taux de roulis (*φ̇*), un signal de non-plausibilité est alors généré, lequel évalue le taux de roulis (*φ̇*) mesuré ou déterminé comme non plausible, et
b) s'il est constaté une ou plusieurs fois qu'un ou le taux de roulis mesuré ou déterminé (*φ̇*) se situe à l'intérieur de la plage plausible pour le taux de roulis (*φ̇*), aucun signal de non-plausibilité n'est alors généré et il est considéré qu'il s'agit d'une valeur plausible pour le taux de roulis mesuré ou déterminé (*φ̇*).

5. Dispositif destiné à mettre en œuvre le procédé selon l'une quelconque des revendications précédentes, comprenant au moins :
a) un appareil de capteur avec au moins un capteur d'accélération et au moins un capteur de taux de rotation,
b) un appareil de calcul et d'évaluation qui traite des signaux d'accélération de l'au moins un capteur d'accélération et de l'au moins un capteur de taux de rotation conformément au procédé.
